# EUROPEAN PATENT APPLICATION

(11) **EP 2 400 431 A1**
(43) Date of publication of application: **28.12.2011**
(21) Application number: 10712449.7
(22) Date of filing: 18.02.2010
(51) Int. Cl.: G06K 9/00, G01C 21/34, G08G 1/0968, G05B 13/02

(54) **DEVICE FOR MANAGING AND CONTROLLING BEHAVIOURAL ROUTINES**

(30) Priority: 18.02.2009 ES 200900454
(71) Applicant: Crambo, S.a., 28850 Torrejon de Ardoz (ES); Garcia Manchado, Nilo, 28850 Torrejon De Ardoz (ES)
(72) Inventor: GARCIA MANCHADO, Nilo, E-28850 Torrejon De Ardoz (ES)
(74) Representative: Temino Ceniceros, Ignacio
(86) International application number: PCT/ES2010/070089
(87) International publication number: WO 2010/094826

(57) **Abstract**

A device for the management and control of conduct routines comprising at least a first means for acquiring (11,21) a certain behaviour or activity configured to capture a behaviour and/or activity repeated in time; and a second means for storing (12,22) behaviour and activity patterns configured to store the behaviour patterns interpreted as new, which is **characterised** because, in a third logical means for processing and control (13,23), the results of the first and second means are compared in order to establish a configured output according to which: (i) in the event that the comparison between the current pattern coincides with some past pattern, a first alert output is established to the user and is configured to inform them that the current pattern has been recognised; and (ii) a second output towards a fourth means for actuating (14,24), whereby the behaviour or activity recognised is reproduced in an autonomous fashion.

## Description

The object of the present invention is a device for the management and control of a user's conduct routines, and the method for implementing the said management and control, in such a way that, when faced with a repeated conduct or activity on the part of the user, the said device is capable of learning the said conduct and reproducing it later when the necessary initial conditions arise, the device itself managing the said conduct and/or activity.

The present invention is included in those within the artificial intelligence and self-learning systems sector.

### PRIOR ART

Currently, there are several different devices and methods for, on the one hand, recognising conducts, and, on the other, comparing said recognized conduct with pre-established behaviour patterns, and hence managing a certain activity. An example of the aforesaid are documents WO2004003848 and EP1071055. The former describes a method and apparatus for modelling behaviour, using a probability distribution function to model the behaviour of humans and/or animals, but without generating actuation means to act on this behaviour and/or activity. On the other hand, the second document mentioned does analyse current behaviour with respect to past behaviour, and provides a solution which is a simple comparison between patterns, without establishing subsequent contributions.

Document US2001018663 shows a method for planning tasks, whereby a mobile device receives information on the geographical position and, on the basis of this position, indexes a descriptive tasks database with an aim to identifying tasks associated with the position received and informing the user. The said database can be located in the actual mobile device or, externally, anywhere that can be accessed via a variety of communication interfaces, using widely known techniques. Together with the task description, the database stores the information on the geographical coordinates of the place where the task is to be carried out. The user is alerted of their position near the place where the task is carried out and can be shown the route towards the corresponding destination on the map. Likewise, the database can be associated to an application program which allows us to learn about the user's habits, and establish behaviour patterns.

Document US2003224762 describes a mobile device which activates alerts based on location or on other events or tasks planned by the user or by another user. The user can enter the information on the required location in many ways. Thus, when the device detects that the user is entering the chosen location, a corresponding alert is generated. In the event that the activation alert event is associated in a second device, when the second device completes the corresponding task, it notifies the first device so that the latter can generate an alert.

Document US2006061488 shows a system for providing task reminders based on location information. The system can comprise multiple devices (nodes) with the capacity to process, and means of communication with the outside, which can be of a variety of types, for example, electronic diaries (PDAs) with wireless connection. The devices can include a module for the management of tasks in order to manage a list of tasks representing events or actions to be carried out by the user of the same. The tasks can be associated with specific locations, so that an alert is generated when the device is within a predetermined proximity range of the referred location. In one mode of realisation of the invention, localisation can be an equivalent device, in such a way that an alarm is enabled when both devices are close together; in order to know the separation distance, both devices exchange information on their location.

None of the abovementioned documents solves the objective technical problem consisting in the repeated management and action of a device before a user's conduct routine. In other words, none of the abovementioned documents, before a repetitive event and based on a history of actions, allows the repetition of the conduct in an automatic way, but are rather limited to emitting a given alarm.

### DESCRIPTION OF THE INVENTION

To mitigate the aforementioned problems, the device for the management and control of conduct routines includes at least (a) a means for acquiring a behaviour or given activity configured to capture a behaviour and/or activity repeated in time; and (b) second means for storing the behaviour and activity patterns configured to store the behaviour patterns interpreted as new; whereby the said device is characterised by (c) a third set of logical means for processing and control, whereby the results of the first and second means are compared in order to establish a configured output according to which: (i) in the event that the comparison between the present pattern coincides with a past pattern, a first alert output is established to the user and configured to inform them that the current pattern has been recognised; and (ii) a second output towards a fourth actuation means whereby the behaviour or activity recognised is reproduced autonomously.

The object of the invention is achieved thanks to the system described above. The said object is for the system to be capable of learning the said conduct and subsequently reproduce it, when the necessary conditions are present, the device itself managing the said conduct and/or activity.

Throughout the description and claims, the word "comprises" and its variants does not pretend to exclude other technical characteristics, additives, components or steps. For experts in the subject, other objects, advantages and characteristics of the invention will inevitably develop in part from the description and in part from the practice of the invention. The following examples and figures are provided by way of illustration, and they do not pretend to limit the present invention. In addition, the present invention covers all possible combinations of particular and preferred embodiments specified herein.

### A BRIEF DESCRIPTION OF THE DRAWINGS

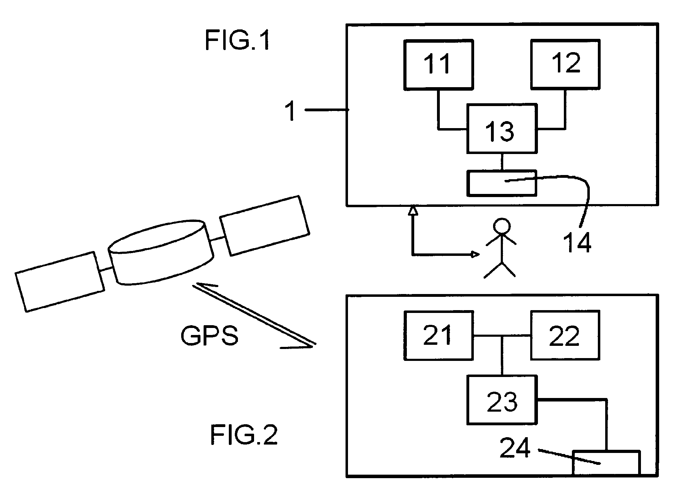

- FIG 1.: It shows a schematic description of the device which is the object of the present invention in its application for the control of conduct routines in video and TV recording apparatus.
- FIG 2.: It shows a schematic description of the device which is the object of the present invention in its application for the automatic generation of GPS navigator routes.

### DETAILED DESCRIPTION OF PREFERRED EMBODIMENTS AND EXAMPLES

The device for the management and control of conduct routines comprises, in all its possible realisations, at least (a) a first means for acquiring a behaviour or given activity configured to capture a behaviour and/or activity repeated in time; and (b) a second means for storing behaviour and activity patterns configured for storing the behaviour patterns interpreted as new; whereby the said device is characterised by (c) a third logical means for processing and controlling, with which the results of the first and second means are compared and a configured output is established whereby: (i) in the event that the comparison between the current pattern coincides with a past pattern, a first alert output to the user is set up to inform them that the current pattern has been recognised; and (ii) a second output towards a fourth actuation means whereby the behaviour or recognised activity is autonomously reproduced.

### Example 1 of the application. Video recording

The device thus described has a multitude of examples of application. In a first example, the device can be used in video (1) which records what the user historically sees or a similar action of the routine, on the basis of the stored history. In this example of use, the first acquisition means (11) are typical video elements which allow to establish what is being visualised and/or recorded, in such a way that if a certain behaviour is repeated, it is stored in the second means (12), an internal video memory with a database of pattern storage; and comparing in the third means (a digital signal processor, (13)) with what is being captured at that time to establish if the video must be commanded to record the action or not.

This example would work as follows, in the event that a user usually records a TV program at 10 pm, for example, processing means (13) assume that, following a plurality of repetitions or routines, the user has that habit, and asks if, from then on, when the time comes, they wish to run the routine or cancel it, for which purpose it will use the video's own HMI (14) interface. Similarly, if the user is not present at that moment or does not interact with video (1), then, by default, the device itself will carry out the action planned in the routine.

### Example 2 of the application. Automatic generation of routes in GPS navigators

In a second possible use, the device can be used in combination with a GPS 2-type navigator, which acquires each of the routes that the user enters, comparing them with their coordinates, in such a way that a record of routes is stored in memory or database (21) for that purpose, that is, the first means of acquisition would correspond with said data storage means (21) configured to store a history of routes and corresponding geographical location coordinates. The third means (digital signal processor (23)) will first analyse the record and store those defined as routines in the second pattern storage means, that is, a second routine database (22). Once the routes are defined, they are compared with the current geographical point, with an aim to locating a definite behaviour, showing the user the route corresponding to the said pattern.

The typical functioning of the device under this example is as follows: in the event that the user usually goes to their place of work directly from home, for example, processing means (23) assume that, given that the route is defined in the second route storage means (22), the user is going to that particular place, and asks if from then on they wish that the predefined route be shown or be cancelled, for which purpose the actual HMI (24) interface of the GPS device will be used. Likewise, in combination with the GPS (2) device clock, a possible routine to be detected is the user's room in a given place at defined times such as, for example, work, sleeping, the gym, etc., in such a way that, in combination with the geographical location, a plurality of services associated with this geographical location can be offered.

It is important to point out that the prediction of the route executed by the device at the same time enables the proposal of a series of services and/or warnings. Therefore, once the "*work route*" routine is detected, GPS (1) device can connect to a traffic control centre, and inform on the conditions of this route, or connect with the weather service or any other service that may affect the user's final decision to execute the routine.

### Other examples

In the case of another type of device, the telephone, if we telephone the same person every day, the system alerts us that we have not yet called.

Another example of the application is the household appliance, for example, a coffee maker that needs time for heating the coffee in order to serve it, and, every day, the device starts up at 7 am in order to be ready for 7.02 am, a heating device for the bathroom that switches on a few minutes before the person uses it and, office air conditioning which heats up the room minutes before people start to arrive. Another example is a television set that switches itself off at a certain time every night.

Another example is a possible system for switching on different computer applications or websites. For example, you read a certain newspaper at a given time every day and then you read your emails. The computer does the work for you after learning the routine.

Another example could be that a person goes jogging every day and uses a telephone to see how far they have run. After some time, the device creates the routine and serves as a memory so that it is not forgotten.

It must be pointed out that the device differentiates between implicit and explicit routines. A routine is considered explicit when the user actually carries out the action which they consider routine (in examples 1 and 2, they record a video and/or go to a certain place). However, the device can act analogically with routines that they consider implicit, that is, likewise in relation to examples 1 and 2, a routine is consider implicit when the device understands that the user's given actions always have the same consequences or actions (that is, a prediction of the routine). Thus, if a user switches on video (1) every day at 10 pm, the device can alert that what is going to happen is that a certain TV programme determined by the routine is to be recorded, anticipating the user's action. In the second example, device GPS (2) would alert the user that, given that it is 7 am and they are in the geographical position corresponding to their house, the routine informs them that they have to go to work, and shows them the route.

Optionally, several devices share the different conducts, by means of wireless data transmission. A non-limiting example is the following. If the answering machine gives you a wake up call, it can contact the coffee machine to activate coffee time conduct and the this, in turn, can contact the company's air conditioning to prepare the room for when you arrive. Similarly, several devices share convenient routes among several users, and, in addition, when one user's routine is similar to that of another, this information can be shared for further interesting proposals.

## Claims

1. A device for the management and control of conduct routines comprising, at least, a first means for acquiring (11,21) a behaviour or given activity configured to capture a behaviour or activity repeated in time; a second means for storing (12,22) behaviour and activity patterns in order to store behaviour patterns interpreted as new, which is **characterised** because, in a third logical means for processing and control (13,23), the results of the first and second means are compared to establish a configured output according to at least one of the following actions: (i) in the event that the comparison between the current pattern coincides with a past pattern, a first alert output to the user is established and it is configured to inform them that the current pattern has been recognised; and (ii) a second output towards a fourth means for actuating (14,24), whereby the behaviour or activity recognised is reproduced in an autonomous mode.

2. A device in accordance with claim 1 which is **characterised** because it comprises wireless data transmission means configured to share user routes.

3. A mobile phone that is **characterised** because it comprises the device in claims 1 and 2.

4. A GPS-type portable navigation device which is **characterised** because it comprises the device in claims 1 and 2.

5. A household appliance that is **characterised** because it comprises the device in claims 1 and 2.
